# EUROPÄISCHE PATENTSCHRIFT

(11) **EP 3 503 778 B1**
(45) Veröffentlichungstag und Bekanntmachung des Hinweises auf die Patenterteilung: **07.10.2020**
(21) Anmeldenummer: 17754646.2
(22) Anmeldetag: 03.08.2017
(51) Int. Cl.: A47J 43/07, A47J 43/044, A47J 44/00, A47J 43/08, A47J 43/06

(54) **KÜCHENMASCHINE UND VERFAHREN ZUM BETREIBEN EINER KÜCHENMASCHINE**
FOOD PROCESSOR AND METHOD FOR OPERATING A FOOD PROCESSOR
ROBOT DE CUISINE ET PROCÉDÉ PERMETTANT DE FAIRE FONCTIONNER UN ROBOT DE CUISINE

(30) Priorität: 26.08.2016 DE 102016216100
(43) Veröffentlichungstag der Anmeldung: 03.07.2019
(73) Patentinhaber: BSH Hausgeräte GmbH, 81739 München (DE)
(72) Erfinder: BRECKO, Ales, 3000 Celje (SI); CATER, Matej, 3301 Petrovce (SI); STROJANSEK, Aleksander, 3331 Nazarje (SI)
(86) Internationale Anmeldenummer: PCT/EP2017/069617
(87) Internationale Veröffentlichungsnummer: WO 2018/036774

(56) Entgegenhaltungen:
- WO-A1-2008/031711
- WO-A1-2008/031711
- WO-A1-2012/080679
- WO-A1-2015/086965
- WO-A1-2015/086965
- CN-Y- 201 205 230
- CN-Y- 201 205 230
- DE-U1-202006 014 236
- DE-U1-202006 014 236

## Beschreibung

### Hintergrund der Erfindung

Die vorliegende Erfindung betrifft eine Küchenmaschine mit einem Schwenkarm, an dem eine Kupplung für ein externes Zubehörgerät vorgesehen ist, und mit einer Schwenkarmsperreinrichtung zur Verriegelung und Entriegelung des Schwenkarms gemäß dem Oberbegriff des Patentanspruchs 1. Sie betrifft außerdem ein Verfahren gemäß dem Oberbegriff des Patentanspruchs 13.

### Stand der Technik

Aus dem Stand der Technik sind Küchenmaschinen bekannt, wie zum Beispiel die Küchenmaschinen der Baureihe MUM der Bosch Siemens Hausgeräte GmbH, die einen Sockel mit einem Schwenkarm aufweisen, an dem eine Kupplung für ein externes Bearbeitungsgerät, wie zum Beispiel einen Mixer, vorgesehen ist. Der Mixer kann an dem Schwenkarm temporär fixiert werden. Derartige Küchenmaschinen umfassen gewöhnlich eine Rührschüssel, in der Teigwaren oder andere Speisen zubereitet werden können. Die Rührschüssel ist hierbei von der Küchenmaschine abnehmbar, so dass sie einerseits vielseitig verwendbar ist und andererseits leicht gesäubert werden kann. Um eine solche abnehmbare Rührschüssel auch gut an der Küchenmaschine platzieren oder von der Küchenmaschine problemlos abnehmen zu können ist der Schwenkarm gegenüber dem Sockel der Küchenmaschine schwenkbar.

Während der Bearbeitung des Guts in der Rührschüssel darf der Schwenkarm nicht verschwenkt werden. Eine Schwenkarmsperreinrichtung verhindert ein solches unbeabsichtigtes Verschwenken während der Bearbeitung. Der Schwenkarm ist während der Bearbeitung in der Rührschüssel gesichert. Wenn die Bearbeitung in der Rührschüssel erfolgt ist, kann der Schwenkarm hochgeklappt werden. Der Benutzer muss allerdings selbst darauf achten, dass der Schwenkarm frei von weiteren Geräten ist. Wird dies übersehen, kann dies schwerwiegende nachteilige Folgen für die Küchenmaschine haben. Die Schwenkbewegung führt zum Kippen des Zubehörgeräts. Die schwenkbare Verbindung und die Schwenklagerungen können beschädigt werden. Austretendes Gut geht verloren und kann nicht mehr verzehrt werden. Sollte es sich um ein heißes Gut handeln, besteht die Gefahr, dass der Benutzer sich verletzt. WO 2015/086965 A1 offenbart eine Küchenmaschine.

### Der Erfindung zugrunde liegende Aufgabe

Der Erfindung liegt die Aufgabe zugrunde, eine verbesserte Küchenmaschine und ein verbessertes Verfahren zum Betreiben einer Küchenmaschine bereitzustellen. Insbesondere können Küchenmaschinen der eingangs genannten Art ein hohes Verletzungsrisiko und Beschädigungspotential für die Küchenmaschine in sich bergen, da vor dem Verschwenken des Schwenkarms nicht automatisch sicher gestellt ist, dass kein Zubehör oder externes Bearbeitungsgerät an dem Schwenkarm angekuppelt ist; bei den bekannten Maschinen muss dies manuell überwacht werden. Deshalb ist es eine Aufgabe der Erfindung, Mittel bereitzustellen, die dazu beitragen können, dieses Verletzungsrisiko und/oder Beschädigungspotential zu reduzieren oder sogar ausschließen.

### Erfindungsgemäße Lösung

Zur Lösung der Aufgabe lehrt die vorliegende Erfindung eine Küchenmaschine mit Merkmalen des Anspruchs 1. Die erfindungsgemäße Küchenmaschine umfasst einen Schwenkarm, an dem eine Kupplung für ein externes Zubehörgerät vorgesehen ist, und eine Schwenkarmsperreinrichtung zur Verriegelung und Entriegelung des Schwenkarms. Es sind Mittel zur Blockierung der Schwenkarmsperreinrichtung in der Verriegelungsstellung vorgesehen, die bei in die Kupplung eingesetztem externem Zubehörgerät aktivierbar sind.

Zur Lösung der Aufgabe lehrt die Erfindung auch ein Verfahren zum Betreiben einer Küchenmaschine gemäß Patentanspruch 13, bei der an einem Schwenkarm ein externes Zubehörgerät in eine Kupplung eingesetzt werden kann und in einer Arbeitsposition gehalten und der Schwenkarm in der Arbeitsposition gegen ein unbeabsichtigtes Schwenken gesperrt wird, und bei dem zum Entsperren des Schwenkarms eine Schwenkarmsperreinrichtung betätigt werden kann. Durch das Einsetzen des Zubehörgeräts werden Mittel zur Blockierung der Schwenkarmsperreinrichtung in der Arbeitsposition betätigt.

Durch die erfindungsgemäße Lösung wird eine Küchenmaschine mit einem Sicherheitsmechanismus bereitgestellt, der dazu führt, dass der Schwenkarm nicht mehr nach oben geklappt werden kann, auf dem sich ein Zubehörgerät befindet. Eine Beschädigung der Küchenmaschine durch ein zu weites Nach-oben-Klappen kann ebenso verhindert werden wie eine mögliche Verletzung des Benutzers der Küchenmaschine.

### Bevorzugte Ausgestaltung der Erfindung

Bei einer bevorzugten Ausführungsform sind die Mittel durch ein verschiebbares Sperrelement ausgebildet. Dies hat den Vorteil, dass eine technische Umsetzung der erfindungsgemäßen Lösung vorgeschlagen wird, die wenige Bauteile benötigt und auf einer einfachen translatorischen Bewegung beruht.

Bevorzugt ist es, dass das Sperrelement in Richtung der Kupplungsachse verschiebbar ist. Durch das Einsetzen des Zubehörgeräts wird das Sperrelement nach unten gedrückt, besonders vorzugsweise in Längsrichtung eines Sockelteils der Küchenmaschine. Im Zusammenhang mit der Erfindung bedeutet "unten" die zur Unterlage, auf der die erfindungsgemäße Küchenmaschine - gewöhnlich mit ihrem Sockelteil - bei vorgesehenem Gebrauch steht, z. B. die Arbeitsfläche eines Küchentischs, weisende Richtung. Das Sockelteil (Grundkörper des Küchengeräts) ist im Sinne dieser Erfindung das Element des Küchengeräts, das im Betriebszustand des Küchengeräts auf einer Unterlage, wie beispielsweise einer Küchenarbeitsplatte, abgestellt ist, also mit ihr - beispielsweise über Standfüße z. B. an einer Bodenwand, oder auch direkt über eine Bodenwand, in Kontakt steht.

Das Zubehörgerät kann ein Bearbeitungsgerät, wie beispielsweise ein Mixer, sein. Der bevorzugte Mixer umfasst einen Mixbecher mit abnehmbarem Deckel und ein daran angebrachtes oder lösbar anbringbares und an die Kupplung ankoppelbares Mixwerkzeug, typischerweise mit einem rotierbares Messer. Die gebräuchlichsten Zubehörgeräte können mit dem erfindungsgemäßen Sicherheitsmechanismus kombiniert werden.

Die bevorzugte Schwenkarmsperreinrichtung kann durch ein bewegbares Aktivierungselement zwischen einer Verriegelungsstellung zur Verriegelung des Schwenkarms und einer Entriegelungsstellung zur Entriegelung des Schwenkarms hin- und her bewegt werden. Bei einer bevorzugten Ausführungsform der Erfindung ist das Aktivierungselement schwenkbar. Zu diesem Zweck ist das Arretierungselement vorzugsweise auf einer Welle gelagert, die ihrerseits vorzugsweise am Sockelteil des Küchengeräts gelagert ist.

Die bevorzugte Schwenkarmsperreinrichtung ist durch die Mittel zur Blockierung des Aktivierungselements, besonders vorzugsweise des schwenkbaren Aktivierungselements arretierbar. Im Sinne der Erfindung bedeutet "arretieren", dass das Aktivierungselement in der Weise in seiner Bewegung eingeschränkt ist, dass es die Schwenkarmsperrvorrichtung nicht mehr aus ihrer Verriegelungsstellung in ihre Entriegelungsstellung gebracht werden kann. Es bedeutet aber nicht notwendigerweise, dass es in seinem arretierten Zustand vollkommen unbewegbar ist. Letzteres wäre nur in einer von zahlreichen denkbaren Ausgestaltungen der Erfindung der Fall.

Eine präzise und dennoch technisch einfache Umsetzung der erfindungsgemäßen Lösung kann darin bestehen, dass das Aktivierungselement einen Nocken aufweist, und die Mittel zur Blockierung einen Absatz umfassen, der mit dem Nocken zusammenwirken kann, um das Aktivierungselement zu arretieren. Besonders vorzugsweise ist der Absatz bei Aktivierung der Mittel in eine Bewegungsrichtung, besonders vorzugsweise in eine Schwenkrichtung vor dem Nocken positionierbar; dabei ist diese Bewegungs- oder Schwenkrichtung vorzugsweise die Richtung, in die das Arretieringselement bewegt werden muss, um es von der Verriegelungsstellung in die Entriegelungsstellung zu bewegen.

In einer bevorzugten Ausführung der Erfindung ist das das Aktivierungselement mit einem von außen betätigbaren Hebel der Schwenkarmsperreinrichtung fest verbunden. Es ist ein erreichbarer Vorteil dieser Ausführung der Erfindung, dass eine Betätigung des Schwenkmechanismus des Schwenkarms durch den Anwender verhindert werden kann, weil der Anwender den Schwenkarm mit dem Hebel nicht freischalten kann, solange ein Zubehörgerät in die Kupplung eingesetzt ist.

Eine Ausführungsform der Erfindung weist ein elastisches Element zum Vorspannen der Mittel zur Blockierung in die Ruhestellung auf. Dieses Element kann zum Beispiel als Feder ausgebildet sein, beispielsweise als Schraubenfeder, Spiralfeder oder Federbogen. Es ist ein erreichbarer Vorteil dieser Ausführungsform der Erfindung, dass stets eine automatische Rückstellung in die neutrale Ausgangsstellung bei Abnahme des Zubehörgeräts vom Schwenkarm erfolgen kann. Vorzugsweise greift das Federelement an das Sperrelement an.

Das bevorzugte Sperrelement weist einen Teil auf, der mit dem Zubehörgerät zusammenwirken kann, um das Mittel zur Blockierung der Schwenkarmsperreinrichtung in der Verriegelungsstellung zu aktivieren. Vorzugsweise ragt dieser Teil in einen Bereich hinein, der im Falle eines in die Kupplung eingesetzten externen Zubehörgeräts von diesem eingenommen wird. Dadurch kann vorteilhafterweise erreicht werden, dass der Teil beim Einsetzen des Zubehörgeräts in die Kupplung aus diesem Bereich herausbewegt wird, vorzugsweise nach unten gedrückt wird, besonders vorzugsweise gegen die Kraft des elastischen Elements. Der Bereich befindet sich vorzugsweise in der Nähe der Kupplung oder an oder in der Kupplung zum Ankoppeln des Zubehörgeräts.

Das Teil ist vorzugsweise so an dem Sperrelement angebracht (besonders vorzugsweise unbeweglich), dass durch das Einsetzen des Zubehörgeräts auch das Sperrelement nach unten gedrückt wird, wie eingangs bereit genauer beschrieben. Das Teil kann zum Beispiel als Kappe ausgebildet sein, die vorzugsweise an einen Ende des Sperrelements angeordnet ist, besonders vorzugsweise an dem von dem Aktivierungselement abgewandten Ende. In dieser Ausführung der Erfindung kann das Sperrelement einfach betätigt werden, indem die Kappe gedrückt wird. Selbstverständlich ist eine derartige Kappe nicht zwingend für die Funktion des Sicherheitsmechanismus gemäß der Erfindung erforderlich. Sie erweist sich aber als nützlich für den Zusammenbau des einzelnen Mittels des Sicherheitsmechanismus' indem sie sozusagen als Schlusselement auf das Sperrelement aufgesteckt wird.

Das Aktivierungselement der Schwenkarmsperreinrichtung kann einenends gelenkig mit einem Verbindungselement gebunden sein, das anderenends mit dem Schwenkarm verbunden ist. Es ist ein erreichbarer Vorteil dieser Ausführung der Erfindung, dass die erfindungsgemäße Lösung dann direkt auf die Schwenkarmsperreinrichtung wirkt.

### Kurzbeschreibung der Zeichnungen

Die Erfindung wird im Folgenden anhand schematischer Zeichnungen an einem Ausführungsbeispiel mit weiteren Einzelheiten näher erläutert.

Es zeigen:
- Fig. 1:: eine erste perspektivische Ansicht einer erfindungsgemäßen Küchenmaschine;
- Fig. 2:: eine zweite perspektivische Ansicht einer erfindungsgemäßen Küchenmaschine.
- Fig. 3:: eine Explosionsdarstellung der Mittel zur Blockierung der Schwenkarmsperreinrichtung;
- Fig. 4a:: einen Längsschnitts der erfindungsgemäßen Mittel zur Blockierung der Schwenkarmsperreinrichtung in Ruhestellung,
- Fig. 4b:: einen Längsschnitts der erfindungsgemäßen Mittel zur Blockierung der Schwenkarmsperreinrichtung bei Betätigung,

### Ausführliche Beschreibung des Ausführungsbeispiels

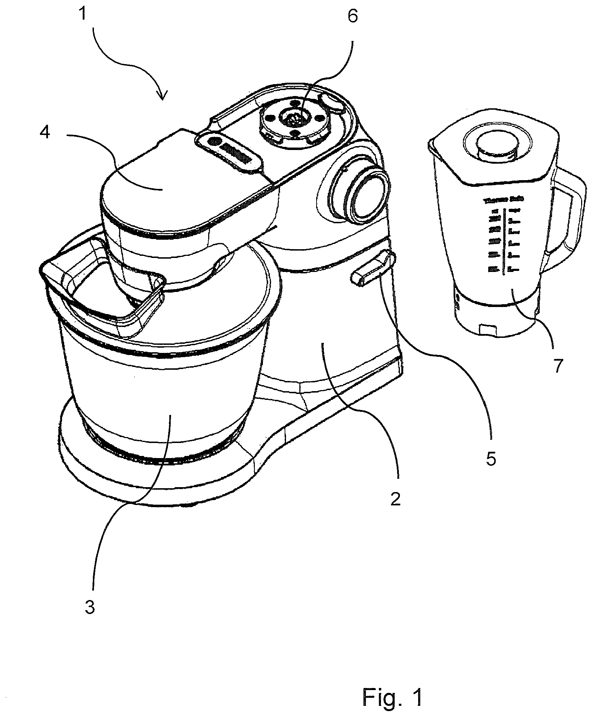

Die Figuren 1 bis 4 zeigen eine erfindungsgemäße Küchenmaschine 1 oder Elemente der Küchenmaschine 1, die für die Erfindung von besonderer Bedeutung sein können. In der Fig. 1 ist eine Küchenmaschine 1 dargestellt. Die Küchenmaschine 1 im Sinne der Erfindung ist ein elektrisch oder mechanisch antreibbares Standküchengerät, insbesondere eine Universalküchenmaschine. Die Küchenmaschine ist zur Bearbeitung von Nahrungsmitteln vorgesehen und umfasst zu diesem Zweck Bearbeitungswerkzeuge für Nahrungsmittel, beispielsweise zum Mixen, Kneten, Häckseln, Schneiden, Pürieren oder Entsaften, und Kupplungen zur Aufnahme solcher Bearbeitungswerkzeuge.

Die Küchenmaschine 1 umfasst ein Sockelteil 2. Das Sockelteil 2 (Grundkörper des Küchengeräts) ist im Sinne dieser Erfindung das Element der Küchenmaschine 1, das im Betriebszustand der Küchenmaschine 1 auf einer Unterlage, wie beispielsweise einer Küchenarbeitsplatte, abgestellt ist, also mit ihr über Standfüße, beispielsweise an einer Bodenwand, oder auch direkt über eine Bodenwand in Kontakt steht. An dem Sockelteil 2 befindet sich eine Kupplung für eine Rührschüssel 3.

Weiterhin ist an dem Sockelteil 2 ein Schwenkarm 4 schwenkbar angeordnet. Der Schwenkarm 4 ist im Sinne dieser Erfindung das Element der Küchenmaschine 1, an dem Bearbeitungswerkzeuge angebracht sind oder mittels Kupplungen angebracht werden können. Der Schwenkarm 4 kann ein oder mehrere Bearbeitungswerkzeuge und/oder Kupplungen 5 aufweisen. Eine Schwenkachse ist im Sinne der vorliegenden Erfindung die Rotationsachse, mittels derer der Schwenkarm 4 mit dem Sockelteil 2 verbunden ist, und um die der Schwenkarm 4 gegenüber dem Sockelteil 2 verschwenkt werden kann. Eine Schwenkarmsperreinrichtung verhindert das Schwenken des Schwenkarms 4. Wenn dies von dem Anwender gewünscht ist, kann der Anwender mit Hilfe eines Hebels 5 die Schwenkarmsperreinrichtung betätigen, so dass der Schwenkarm 4 zurück geklappt werden kann.

An dem Schwenkarm 4 ist eine Kupplung 6 für ein Zubehörgerät 7 vorgesehen, das durch einen Mixer ausgebildet ist.

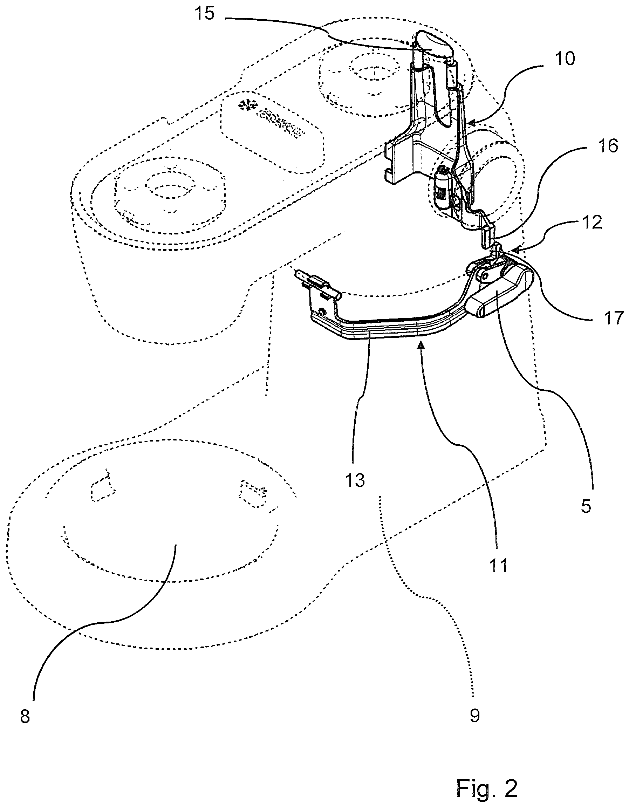

Wie aus Fig. 2 ersichtlich ist, besitzt die Küchenmaschine 1 das Sockelteil 2 zum Aufstellen der Küchenmaschine 1 mit einer Kupplung 8 für eine in der Fig. 2 nicht gezeigte Rührschüssel sowie den mit dem Sockelteil 2 verbundenen Schwenkarm 4. Ein Gehäuse 9 der Küchenmaschine 1 ist durch gepunktete Linien lediglich angedeutet und kann auch andere Konturen aufweisen. Die schwenkbare Verbindung zwischen dem Sockelteil 2 und dem Schwenkarm 4 umfasst eine Schwenkarmsperreinrichtung 10, die einerseits ein Hochklappen des Schwenkarms 4 um die Schwenkachse erlaubt, um beispielsweise Werkzeuge an dem Schwenkarm 4 zu tauschen, und andererseits eine sichere Verrieglung des Schwenkarms 4 im Betrieb der Küchenmaschine 1 gewährleistet. Zum Betrieb der Küchenmaschine 1 ist die weitere Kupplung 6 für entsprechendes Zubehör wie Mixbecher usw. vorgesehen. Mittel 11 sind dazu vorgesehen, die Schwenkarmsperreinrichtung 10 in der dargestellten Sperrposition zu blockieren, um zu verhindern, dass trotz Betätigung des Hebels 5 der Schwenkarm 4 zurückgeklappt werden kann.

Der Fig. 2 ist auch der Aufbau der Schwenkarmsperreinrichtung 10 zu entnehmen. Mithilfe des Hebels 5 kann ein Aktivierungselement 12 ausgelenkt werden, so dass die Bewegung des Hebels 5 über das Aktivierungselement 12 auf ein Verbindungselement 13 übertragen wird. Das Verbindungselement 13 ist einerseits gelenkig mit dem Aktivierungselement 12 verbunden und andererseits mit dem Schwenkarm 4. Bei Betätigung des Aktivierungselements 12 wird der Schwenkarm 4 freigegeben und kann verschwenkt werden.

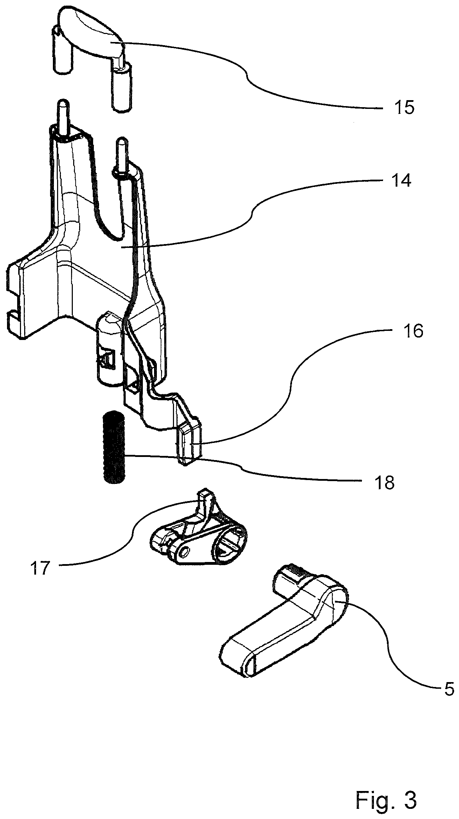

In der Fig. 3 ist die Ausbildung der Mittel zur Ausbildung der Mittel zur Blockierung der Schwenkarmsperreinrichtung dargestellt. Zentrales Bauteil ist ein Sperrelement 14, das an seinem einen Ende mit einer Kappe 15 versehen werden kann, und an seinem anderen Ende einen Absatz 16 aufweist, der vor einen Nocken 17 des Aktivierungselements 12 bewegt werden kann. Durch Drücken der Kappe 15 in Pfeilrichtung 16 wird das Sperrelement 14 derart verschoben, dass der Absatz 16 gegen das Aktivierungselement 12 bewegt wird. Auch durch Betätigung des Hebels 5 kann das Aktivierungselement 12 nicht mehr ausgelenkt werden. Der Schwenkarm kann nicht mehr freigegeben werden. Die Übertragung der Drehung des Hebels 5 auf das Verbindungselement 13 findet nicht mehr statt. Die Schwenkarmsperreinrichtung ist blockiert. Für eine Rückstellung des Blockademechanismus in die Ausgangslage ist eine Rückstellfeder 18 vorgesehen.

Die Funktionsweise der Erfindung ist den Fig, 4a und 4b besser dargestellt.

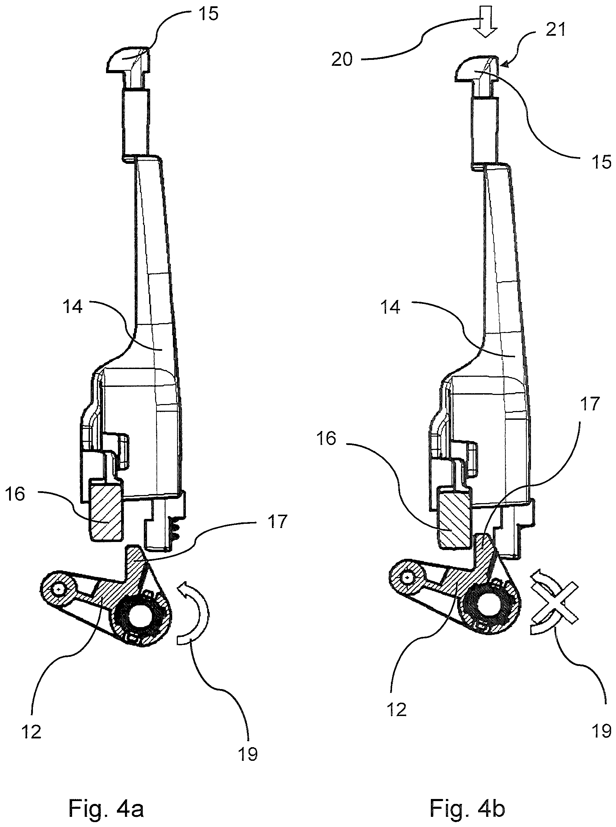

Fig. 4a zeigt die Ausgangslage, d.h. die Schwenkarmsperreinrichtung kann betätigt werden. Mit Hilfe des Hebels kann das Aktivierungselement 12 in Pfeilrichtung 19 gedreht werden, um die Drehung auf die Verbindung zum Schwenkarm zu übertragen und den Schwenkarm zum Verschwenken freizugeben.

Fig. 4b zeigt die blockierte Stellung bei eingesetztem Zubehörgerät in die Kupplung. Durch das Einsetzen des Zubehörgeräts wird Druck auf die Kappe 15 in Pfeilrichtung 20 ausgeübt.
Daraus resultiert eine translatorische Verschiebung des Sperrelements 14 in Pfeilrichtung 20. Der Absatz 16 wird vor dem Nocken 17 des Aktivierungselements 12 positioniert. Das Aktivierungselement 12 kann nicht mehr in Pfeilrichtung 19 verschwenkt werden. Der Schwenkarm ist blockiert und kann nicht mehr verschwenkt werden, auch wenn der Anwender den Hebel betätigt und eigentlich eine Schwenkbewegung durchzuführen beabsichtigt. Der Sicherheitsmechanismus schützt die Küchenmaschine und den Anwender.

Fig. 4a und Fig. 4b zeigen eine Variante der Erfindung, bei der das Sperrelement 14 translatorisch bewegt, das heißt verschoben wird. Es ist auch denkbar jegliche andere Art der Bewegung an Stelle einer Translation zu nutzen, wie zum Beispiel eine Rotation, eine Schwenkbewegen oder eine Kombination unterschiedlicher Auslenkungen. Relevant ist, dass ein Sperrelement bewegt wird und die Schwenkarmsperreinrichtung blockiert.

Für eine Rückstellung des Sperrelements in die Ausgangslage sorgt die Federkraft der Rückstellfeder. Für ein entsprechendes Zusammenspiel zwischen dem eingesetzten Zubehörgerät und dem Sperrelement 14 weist die Kappe 15 eine Schrägfläche 21 auf, an der eine Gegenfläche des Zubehörgeräts zur Anlage kommen kann.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Die oben beschriebene Küchenmaschine hat den Vorteil, dass durch den Sicherheitsmechanismus der Schwenkarm nicht mehr nach oben geklappt werden kann, wenn sich darauf ein Zubehörgerät befindet. Eine Beschädigung der Küchenmaschine durch ein zu weites Nach-oben-Klappen kann ebenso verhindert werden wie eine mögliche Verletzung des Benutzers der Küchenmaschine.

### Bezugszeichenliste

- 1: Küchenmaschine
- 2: Sockelteil
- 3: Rührschüssel
- 4: Schwenkarm
- 5: Hebel
- 6: Kupplung
- 7: Zubehörgerät
- 8: Kupplung
- 9: Gehäuse
- 10: Mittel zur Blockierung der Schwenkarmsperreinrichtung
- 11: Schwenkarmsperreinrichtung
- 12: Aktivierungselement
- 13: Verbindungselement
- 14: Sperrelement
- 15: Kappe
- 16: Absatz
- 17: Nocken
- 18: Feder
- 19: Pfeilrichtung
- 20: Pfeilrichtung
- 21: Schrägfläche

## Patentansprüche

1. Küchenmaschine (1) mit einem Schwenkarm (4), an dem eine Kupplung (6) für ein externes Zubehörgerät (7) vorgesehen ist, und mit einer Schwenkarmsperreinrichtung (11) zur Verriegelung und Entriegelung des Schwenkarms (4), **dadurch gekennzeichnet, dass** Mittel (10) zur Blockierung der Schwenkarmsperreinrichtung (11) in der Verriegelungsstellung vorgesehen sind, die bei in die Kupplung (6) eingesetztem externem Zubehörgerät (7) aktivierbar sind.

2. Küchenmaschine nach Anspruch 1, **dadurch gekennzeichnet, dass** die Mittel durch ein verschiebbares Sperrelement (14) ausgebildet sind.

3. Küchenmaschine nach Anspruch 2, **dadurch gekennzeichnet, dass** das Sperrelement (14) in Richtung der Kupplungsachse verschiebbar ist.

4. Küchenmaschine nach einem der vorhergehenden Ansprüche, **dadurch gekennzeichnet, dass** das Zubehörgerät (7) ein Bearbeitungsgerät, wie beispielsweise ein Mixer, ist.

5. Küchenmaschine nach einem der vorhergehenden Ansprüche, **dadurch gekennzeichnet, dass** durch die Mittel (10) zur Blockierung ein drehbar gelagertes Aktivierungselement (12) der Schwenkarmsperreinrichtung (11) arretierbar ist.

6. Küchenmaschine nach Anspruch 5, **dadurch gekennzeichnet, dass** das Aktivierungselement einen Nocken (17) aufweist, und die Mittel zur Blockierung einen Absatz (16) umfassen, der bei Aktivierung der Mittel in Drehrichtung vor dem Nocken (17) positionierbar ist.

7. Küchenmaschine nach Anspruch 5 oder 6, **dadurch gekennzeichnet, dass** das Aktivierungselement mit einem von außen betätigbaren Hebel (5) der Schwenkarmsperreinrichtung (11) fest verbunden ist.

8. Küchenmaschine nach einem der vorhergehenden Ansprüche, **dadurch gekennzeichnet, dass** ein elastisches Federelement (18) zur Vorspannung der Mittel (10) in die Ruhestellung vorgesehen ist.

9. Küchenmaschine nach Anspruch 8, **dadurch gekennzeichnet, dass** das elastische Federelement durch eine Schraubenfeder ausgebildet ist.

10. Küchenmaschine nach einem der vorhergehenden Ansprüche, **dadurch gekennzeichnet, dass** die Mittel zur Blockierung an dem einen Ende im Bereich der Kupplung eine Kappe aufweisen,

11. Küchenmaschine nach Anspruch 10, **dadurch gekennzeichnet, dass** die Kappe (15) eine Schrägfläche aufweist.

12. Küchenmaschine nach einem der vorhergehenden Ansprüche 5 bis 11, **dadurch gekennzeichnet, dass** das Aktivierungselement (12) einenends gelenkig mit einem Verbindungselement (13) gebunden ist, das anderenends mit dem Schwenkarm (4) verbunden ist.

13. Verfahren zum Betreiben einer Küchenmaschine (1), bei der an einem Schwenkarm (4) ein externes Zubehörgerät (7) in eine Kupplung (6) eingesetzt werden kann und in einer Arbeitsposition gehalten und der Schwenkarm (4) in der Arbeitsposition gegen ein unbeabsichtigtes Schwenken gesperrt wird, und bei dem zum Entsperren des Schwenkarms eine Schwenkarmsperreinrichtung (11) betätigt werden kann, **dadurch gekennzeichnet, dass** durch das Einsetzen des Zubehörgeräts (7) Mittel (10) zur Blockierung der Schwenkarmsperreinrichtung (11) in der Arbeitsposition betätigt werden.

14. Verfahren nach Anspruch 13, **dadurch gekennzeichnet, dass** durch das Einsetzen des Zubehörgeräts in die Kupplung ein Sperrelement (14) in Richtung der Kupplungsachse verschoben wird und die Schwenkarmsperreinrichtung in der Arbeitsposition blockiert wird.

15. Verfahren nach einem der Ansprüche 12 bis 14, **dadurch gekennzeichnet, dass** durch das Einsetzen des Zubehörgeräts eine Drehung eines Aktivierungselements (12) der Schwenkarmsperreinrichtung verhindert wird.

## Claims

1. Food processor (1) with a pivot arm (4), on which a coupling (6) for an external accessory device (7) is provided, and with a pivot arm locking facility (11) for locking and unlocking the pivot arm (4), **characterised in that** means (10) for blocking the pivot arm locking facility (11) are provided in the locking position and can be activated with the external accessory device (7) inserted into the coupling (6).

2. Food processor according to claim 1, **characterised in that** the means are embodied by a displaceable blocking element (14).

3. Food processor according to claim 2, **characterised in that** the blocking element (14) can be displaced in the direction of the coupling axis.

4. Food processor according to one of the preceding claims, **characterised in that** the accessory device (7) is a processing device, such as a mixer, for instance.

5. Food processor according to one of the preceding claims, **characterised in that** a rotatably mounted activation element (12) of the pivot arm locking facility (11) can be stopped by the means (10) for blocking.

6. Food processor according to claim 5, **characterised in that** the activation element has a tappet (17), and the means for blocking comprise a projection (16) which can be positioned in front of the tappet (17) when the means are activated in the direction of rotation.

7. Food processor according to claim 5 or 6, **characterised in that** the activation element is fixedly connected to an externally actuatable lever (5) of the pivot arm locking facility (11).

8. Food processor according to one of the preceding claims, **characterised in that** an elastic spring element (18) is provided to pretension the means (10) into the rest position.

9. Food processor according to claim 8, **characterised in that** the elastic spring element is embodied by a helical spring.

10. Food processor according to one of the preceding claims, **characterised in that** the means for blocking have a cap at the one end in the region of the coupling.

11. Food processor according to claim 10, **characterised in that** the cap (15) has an oblique surface.

12. Food processor according to one of the preceding claims 5 to 11, **characterised in that** the activation element (12) is bound at one end in a hinged manner to a connection element (13), which is connected at the other end to the pivot arm (4).

13. Method for operating a food processor (1), in which an external accessory device (7) can be inserted into a coupling (6) on a pivot arm (4) and held in an operating position and in the operating position the pivot arm (4) is blocked against an unintentional pivoting, and with which a pivot arm locking facility (11) can be actuated in order to unlock the pivot arm, **characterised in that** by inserting the accessory device (7) means (10) for blocking the pivot arm locking facility (11) are actuated in the operating position.

14. Method according to claim 13, **characterised in that** by inserting the accessory device into the coupling, a blocking element (14) is displaced in the direction of the coupling axis and the pivot arm locking facility is blocked in the operating position.

15. Method according to one of claims 12 to 14, **characterised in that** a rotation of an activation element (12) of the pivot arm locking facility is prevented by inserting the accessory device.

## Revendications

1. Robot de cuisine (1) comprenant un bras pivotant (4), sur lequel un raccord (6) pour un accessoire externe (7) est agencé, et comprenant un dispositif de blocage de bras pivotant (11) pour verrouiller et déverrouiller le bras pivotant (4),
**caractérisé en ce que** des moyens (10) de blocage pour bloquer le dispositif de blocage de bras pivotant (11) dans la position de verrouillage sont prévus, lesquels moyens peuvent être activés lorsque l'accessoire (7) externe est inséré dans le raccord (6).

2. Robot de cuisine selon la revendication 1, **caractérisé en ce que** les moyens sont formés par un élément de blocage (14) pouvant être déplacé.

3. Robot de cuisine selon la revendication 2, **caractérisé en ce que** l'élément de blocage (14) peut être déplacé dans la direction de l'axe du raccord.

4. Robot de cuisine selon l'une des revendications précédentes, **caractérisé en ce que** l'accessoire (7) est un appareil de traitement, tel qu'un mixeur.

5. Robot de cuisine selon l'une des revendications précédentes, **caractérisé en ce qu'**un élément d'activation (12) du dispositif de blocage de bras pivotant (11) monté de façon rotative peut être arrêté par les moyens (10) de blocage.

6. Robot de cuisine selon la revendication 5, **caractérisé en ce que** l'élément d'activation comprend une came (17), et les moyens de blocage comprennent un épaulement (16) qui peut être positionné lors de l'activation des moyens devant la came (17) dans le sens de rotation.

7. Robot de cuisine selon la revendication 5 ou 6, **caractérisé en ce que** l'élément d'activation est assemblé de façon solidaire à un levier (5) actionnable de l'extérieur du dispositif de blocage du bras pivotant (11).

8. Robot de cuisine selon l'une des revendications précédentes, **caractérisé en ce qu'**un élément de ressort élastique (18) pour pré-contraindre les moyens de blocage (10) dans la position de repos est prévu.

9. Robot de cuisine selon la revendication 8, **caractérisé en ce que** l'élément de ressort élastique est formé par un ressort hélicoïdal.

10. Robot de cuisine selon l'une des revendications précédentes, **caractérisé en ce que** les moyens de blocage comprennent un couvercle à l'extrémité située dans la zone du raccord.

11. Robot de cuisine selon la revendication 10, **caractérisé en ce que** le couvercle (15) comprend une surface inclinée.

12. Robot de cuisine selon l'une des revendications 5 à 11, **caractérisé en ce que** l'élément d'activation (12) est relié de façon articulée à une extrémité à une pièce de liaison (13), qui est reliée à une autre extrémité au bras pivotant (4).

13. Procédé pour faire fonctionner un robot de cuisine (1), dans lequel un accessoire externe (7) peut être inséré dans un raccord (6) sur un bras pivotant (4) et maintenu dans une position de travail et le bras pivotant (4) est bloqué dans la position de travail pour empêcher un pivotement involontaire, et dans lequel un dispositif de blocage du bras pivotant (11) peut être actionné pour débloquer le bras pivotant, **caractérisé en ce que** des moyens (10) de blocage pour bloquer le dispositif de blocage du bras pivotant (11) dans la position de travail sont actionnés par l'insertion de l'accessoire (7).

14. Procédé selon la revendication 13, **caractérisé en ce qu'**un élément de blocage (14) est déplacé en direction de l'axe du raccord par l'insertion de l'accessoire dans le raccord et le dispositif de blocage de bras pivotant est bloqué dans la position de travail.

15. Procédé selon l'une des revendications 12 à 14, **caractérisé en ce qu'**une rotation d'un élément d'activation (12) du dispositif de blocage de bras pivotant est empêchée par l'insertion de l'accessoire.
